# EUROPEAN PATENT APPLICATION

(11) **EP 1 233 622 A2**
(43) Date of publication of application: **21.08.2002**
(21) Application number: 01129112.7
(22) Date of filing: 07.12.2001
(51) Int. Cl.: H04N 7/24, H04N 7/26, H04N 7/173

(54) **Transmission rate control method**

(30) Priority: 07.12.2000 JP 2000372629; 22.01.2001 JP 2001012779
(71) Applicant: MATSUSHITA ELECTRIC INDUSTRIAL CO., LTD., Kadoma-shi, Osaka 571-8501 (JP)
(72) Inventor: Itoh, Tomoaki, Hirataka-shi, Osaka 573-0165 (JP); Yamaguchi, Takao, Soraku-gun, Kyoto 619-0237 (JP); Sato, Junichi, Nara-shi, Nara 631-0801 (JP); Arakawa, Hiroshi, Kyoto-shi, Kyoto 612-8136 (JP); Notoya, Yoji, Neyagawa-shi, Osaka 572-0055 (JP)
(74) Representative: Grünecker, Kinkeldey, Stockmair & Schwanhäusser Anwaltssozietät

(57) **Abstract**

A video file including at least two sets of video data encoded from the viewpoints of encoding rate variation, motion priority and image quality priority is prepared on a sending terminal. Then, the video data to be sent are dynamically switched in accordance with motion/image priority instructions entered by a user into a receiving terminal, or changes in the available transmission bandwidth.

## Description

### BACKGROUND OF THE INVENTION

The present invention relates to a transmission rate control method that can adapt to changes in the available transmission bandwidth, transmission errors and obstacles or the like.

When encoding video data at restricted encoding rates, there is a trade-off between "motion (frame rate)" and "image quality (quality per frame, which is decided by resolution and quantization steps". When encoding at a high frame rate so as not to harm the fluency of the motion, that is, in the case of "motion priority", because the information amount that is placed on one frame decreases, the image quality of each frame is reduced. Conversely, when encoding each frame at high image quality, that is, in the case of "image quality priority", the information amount placed on one frame increases, so that the frame rate has to be reduced.

To solve this problem, in the video data recording device disclosed in JP 2000-287173A, the encoded video data are recorded by automatically setting suitable encoding parameters for the encoder, based on information regarding the content, for example information indicating whether it is a sports or a news program. Thus, it is possible to achieve encoding control for motion priority and image quality priority depending on the type of content.

On IP (Internet Protocol) networks such as intranets and internet, the available transmission bandwidth varies greatly with the connection form. And what is more, the available transmission bandwidth varies over time, due to the influence of other traffic. Here, "available transmission bandwidth" refers to the transmission bandwidth that can be used without causing congestion between the sending and the receiving terminals. In other words, it is the transmission bandwidth without the bandwidth used by the packets lost due to transmission errors or obstacles or the like. For example, when 10% of the packets are lost due to transmission errors at a transmission bandwidth of 100 kbps, then the available transmission bandwidth is 90 kbps.

In order to provide stable communication quality on such a network, a maximum value of the transmission bandwidth that can be guaranteed on the transmission path is estimated (this is also referred to as "bandwidth estimation"), and the data transmission rate from the sending terminal is adjusted depending on the temporal variation of the bandwidth (this is also referred to as "transmission rate control").

Also with transmission rate control of video data in an environment in which certain transmission bandwidths are assigned, there is a trade-off between "motion" and "image quality". It is a fact that in conventional streaming distribution of audio and video data (AV data), transmission rate control for motion priority and image quality in accordance with an instruction by the user (who consumes the content), or transmission rate control adapting to changes in the available transmission bandwidth was not possible. Consequently, if the available transmission bandwidth has become too narrow for the encoding rate of the video data to be sent, then packet loss occurs as not all video data can be sent.

### SUMMARY OF THE INVENTION

It is an object of the present invention to achieve, in a video distribution system, a transmission rate control for motion priority or image quality priority responding to user instructions, or a transmission rate control that adapts to changes in the available transmission bandwidth.

In accordance with the present invention, the transmission rate of data from a sending terminal is controlled by dynamically switching between at least two sets of video data encoded from at least one viewpoint of encoding rate variation, motion priority and image quality priority, in accordance with a change of an available transmission bandwidth or a user instruction.

As a more specific first example of a switching method, AV streams encoded at a plurality of encoding rates (namely 64 kbps, 56 kbps and 48 kbps) are prepared beforehand, the available transmission bandwidth is estimated, and the AV streams are switched depending on the estimation result.

As a second example, when a user instruction regarding motion priority or image quality priority is reported from the receiving terminal to the sending terminal (such an instruction can be reported in advance or it can be reported during the transmission of the AV stream), then, in the case of motion priority, the encoding rate of the AV stream to be transmitted is adjusted. For example, if the available transmission bandwidth is reduced, the encoding rate is changed from 64 kbps to 56 kbps. And when the available transmission bandwidth is reduced in the case of image quality priority, then the transmission rate is adjusted with the number of frames without changing the encoded AV stream.

As a third example, two types of AV streams, one with an encoding rate of 64 kbps encoded with motion priority and the other one encoded with image quality priority, are prepared. The AV stream to be transmitted by the sending terminal is determined depending on the user instructions from the receiving terminal.

### BRIEF DESCRIPTION OF THE DRAWINGS

Fig. **1** is a block diagram illustrating a configuration example of a video distribution system for realizing a transmission rate control method in accordance with the present invention.
Fig. **2** illustrates an example of a video file prepared in the video data storage portion in Fig. **1**.
Fig. **3** is a sequence diagram illustrating the operation of the video distribution system in Fig. **1**.
Fig. **4** shows an example of a specific format of the video file in Fig. **2.**
Fig. **5** is a flowchart illustrating the operation of the video data selection portion in Fig. **1**.
Fig. **6** is a flowchart illustrating in detail the step in Fig. **5** that decides the number of the video data to be sent.
Fig. **7** is a flowchart illustrating the operation of the video data read-in portion in Fig. **1**.

### DETAILED DESCRIPTION OF THE INVENTION

The following is a detailed description of embodiments of the present invention, with reference to the accompanying drawings. Here, an example of applying the present invention to streaming distribution of storage content, as typified by VoD (Video on Demand) and IP broadcasting, is explained. It should be noted that in the embodiments of the present invention, "video data" refers to a plurality of video data sets encoding the same content from at least one viewpoint of encoding variation, motion priority and image quality priority. Furthermore, "video file" refers to files in which these plurality of video data sets have been grouped together as one.

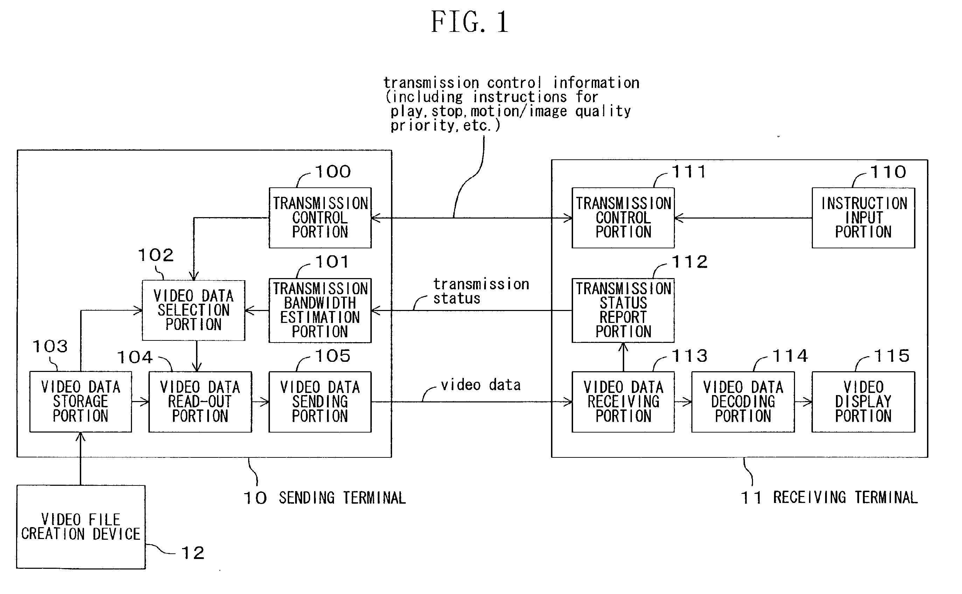

Fig. **1** illustrates a configuration example of a video distribution system for realizing a transmission rate control method in accordance with the present invention. In Fig. **1**, numeral **10** denotes a sending terminal, numeral **11** denotes a receiving terminal, and numeral **12** denotes a video file creation device. The video file creation device **12** is a means for creating a video file including video data to be sent to the receiving terminal **11.** The created video file is passed on to the sending terminal **10,** and stored. It should be noted that in actuality, a plurality of receiving terminals are connected to the sending terminal **10**, but in Fig. **1**, only one receiving terminal **11** is shown, in order to simplify the explanations.

In the sending terminal **10,** numeral **100** denotes a transmission control portion, numeral **101** denotes a transmission bandwidth estimation portion, numeral **102** denotes a video data selection portion, numeral **103** denotes a video data storage portion, numeral **104** denotes a video data read-out portion, and numeral **105** denotes a video data sending portion.

The transmission control portion **100** is a means for receiving from the receiving terminal **11** transmission control information including instructions regarding playing and stopping of video data as well as motion/image quality priority, and for reporting this information to the video data selection portion **102**. It is assumed that with regard to the play/stop instructions, the protocol applied is a protocol for video transmission control, as typified by RTSP (Real Time Streaming Protocol) defined in RFC 2326, and methods such as Setup, Play and Describe can be utilized (see H. Schulzrinne et al., "Real Time Streaming Protocol", RFC 2326, Internet Engineering Taskforce, Apr. 1998). With regard to the motion/image quality priority instructions, it is possible to expand this protocol for video transmission control, or to use a special protocol for motion/image quality priority instructions. For example, it is possible to use expanded versions of the standard protocols P3P (Platform for Privacy Preferences) or CC/PP (Composite Capabilities/Preferences Profile), both standardized by the W3C (World Wide Web Consortium), as the special protocol for motion/image quality priority instructions.

The transmission bandwidth estimation portion **101** is a means for detecting congestion and transmission errors based on transmission status reports from intermediate nodes (such as routers) on the transmission path and from the receiving terminal **11**, estimating the available transmission bandwidth, and reporting the estimation result as transmission rate instructions to the video data selection portion **102**. The method for estimating the available transmission bandwidth can be chosen as appropriate, and suitable examples include the LDA (Loss-Delay Based Adjustment Algorithm) method (see D. Sisalem et al., "The Loss-Delay Based Adjustment Algorithm: A TCP-Friendly Adaptation Scheme", in the proceedings of NOSSDAV'98, July, Cambridge, UK). With the LDA method, the data loss ratio is fed back from the receiving terminal **11** to the sending terminal **10**, and the transmission rate of the sending terminal **10** is controlled based on the packet loss ratio and the receiving rate of the receiving terminal **11**, for example.

The video data selection portion **102** is a means for selecting the video data to be sent in accordance with the available transmission bandwidth determined by the transmission bandwidth estimation portion **101** and the instructions from the transmission control portion **100** regarding motion/image quality priority, and reporting the selection result to the video data read-out portion **104**. The video data selection portion **102** is also a means for starting and terminating the video data read-out portion **104** with the video data play/stop instruction from the transmission control portion **100**.

The video data storage portion **103** is a means for storing video files including the video data to be sent to the receiving terminal **11**, which can be a hard disk drive or a removable media device. This video file has been created beforehand by the video file creation device **12**.

The video data read-out portion **104** is a means for reading out the video data selected by the video data selection portion **102** from the video data storage portion **103**, and passing the read out video data on to the video data sending portion **105**.

The video data sending portion **105** is a means for receiving the video data from the video data read-out portion **104**, and sending it, if necessary in packets, to the receiving terminal **11**. The protocol applied is assumed to be a protocol for sending data, as typified by RTP (Realtime Transport Protocol).

In the receiving terminal **11**, numeral **110** denotes an instruction input portion, numeral **111** denotes a transmission control portion, numeral **112** denotes a transmission status report portion, numeral **113** denotes a video data receiving portion, numeral **114** denotes a video data decoding portion, and numeral **115** denotes a video display portion.

The instruction input portion **110** is an interface with which the user inputs video data play/stop instructions and motion/image quality priority instructions, and is a means for reporting the entered instructions to the transmission control portion **111**.

The transmission control portion **111** is a means for sending transmission control information to the sending terminal **10**, based on the report from the instruction input portion **110**.

The transmission status report portion **112** is a means for calculating statistical information (such as packet loss ratio, propagation delay time or jitter) about the received video data, and for reporting the calculation results to the sending terminal 10 as a transmission status report. The protocol applied is assumed to be a protocol for sending statistical information, as typified by RTCP (RTP Control Protocol). It should be noted that if in the sending terminal **10** there is no need for the statistical information on the receiving terminal **11** for the bandwidth estimation with the transmission bandwidth estimation portion **101**, then the transmission status report portion **112** is unnecessary.

The video data receiving portion **113** is a means for receiving video data from the sending terminal **10**, and for passing them on, if necessary resolving packets, to the video data decoding portion **114**.

The video data decoding portion **114** is a means for decoding the video data received from the video data receiving portion **113**, and for passing the decoding result on to the video display portion **115**.

The video display portion **115** is a means for displaying the data that have been decoded by the video data decoding portion **114** to the user, such as a liquid crystal display or the like.

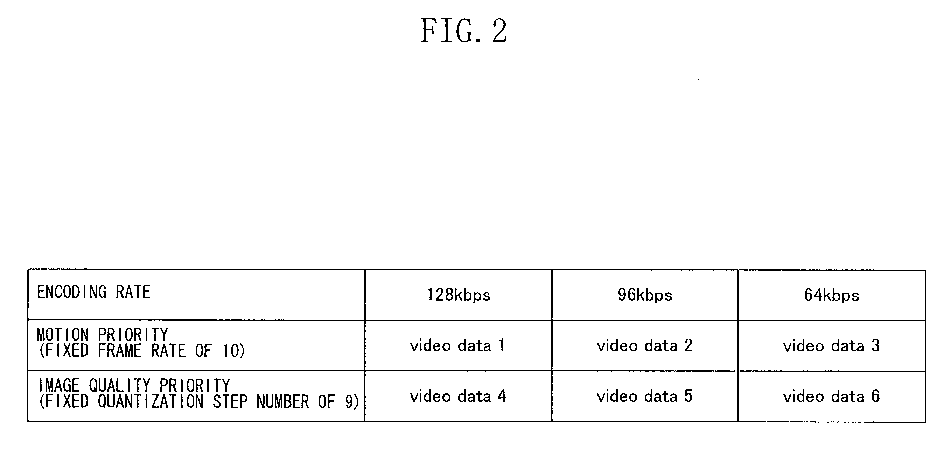

Fig. **2** illustrates an example of a video file created by the video file creation device **12** and prepared in the video data storage portion **103**. The video file shown in Fig. **2** includes six sets of video data **1** to **6** that have been created based on the same content. These video data are encoded in three encoding rate variations (128 kbps, 96 kbps, 64 kbps) each from the viewpoint of motion priority (fixing the frame rate to "frame rate = 10") and from the viewpoint of image quality priority (fixing the quantization step at "quantization step = 9"). In the video data 1, 2 and 3 encoded from the viewpoint of motion priority, the information amount to be sent decreases in that order. Also in the video data 4, 5 and 6 encoded from the viewpoint of image quality priority, the information amount to be sent decreases in that order. Needless to say, it is also possible to prepare more than two sets of video data in motion priority and image quality priority for each encoding rate.

Regarding the encoding parameter of the video data (for example, quantization step, image size, number of frames), the video data after switching are selected based on the encoding parameters for the video data before switching so that it is possible to prevent large changes in image quality. For example, the video data **4** to **6** for image quality priority in Fig. **2** are all encoded for "quantization step = 9", and their image size is the same. Consequently, when switching from the video data **4** with 128 kbps it is possible to prevent large changes in the image quality by selecting the video data **5** with 96 kbps or the video data **6** with 64 kbps as the video data after switching, and controlling the transmission rate with the number of frames per unit time.

It should be noted that in addition to or instead of the variation of the encoding rate in Fig. **2**, it is also possible to prepare a plurality of video data sets with varying degrees of error robustness. For this, it is assumed that the video data are distributed over a wireless network such as a wireless LAN (Local Area Network), W-CDMA (Wideband Code Division Multiple Access) or FWA (Fixed Wireless Access). If the available transmission bandwidth is reduced due to transmission errors or obstacles on the wireless network, then it is possible to prevent the video images from deteriorating on the receiving terminal 11 by sending the video data having a higher degree of error robustness. An example of a supplemental method for error robustness is the supplementing of redundant data as shown in RFC 2733 (see J. Rosenberg et al., "An RTP Payload Format for Generic Forward Error Correction", RFC 2733, Internet Engineering Taskforce, Dec. 1999). Also, if MPEG (Moving Picture Coding Experts Group) 4 is used as the encoding scheme, then other examples include adding a HEC (Header Extension Code), shortening the period for AIR (Adaptive Intra Refresh), shortening the packet length, and shortening the insertion period for I-VOPs (Intra-Video Object Planes). When error robustness is imparted in this manner, then the frame rate or the image quality of the video data have to be reduced by an amount corresponding to the imparted error robustness. Consequently, also when the degree of error robustness is changed, it is necessary to decide in view of user instructions, content type, available transmission bandwidth etc., whether the priority is on motion or on image quality.

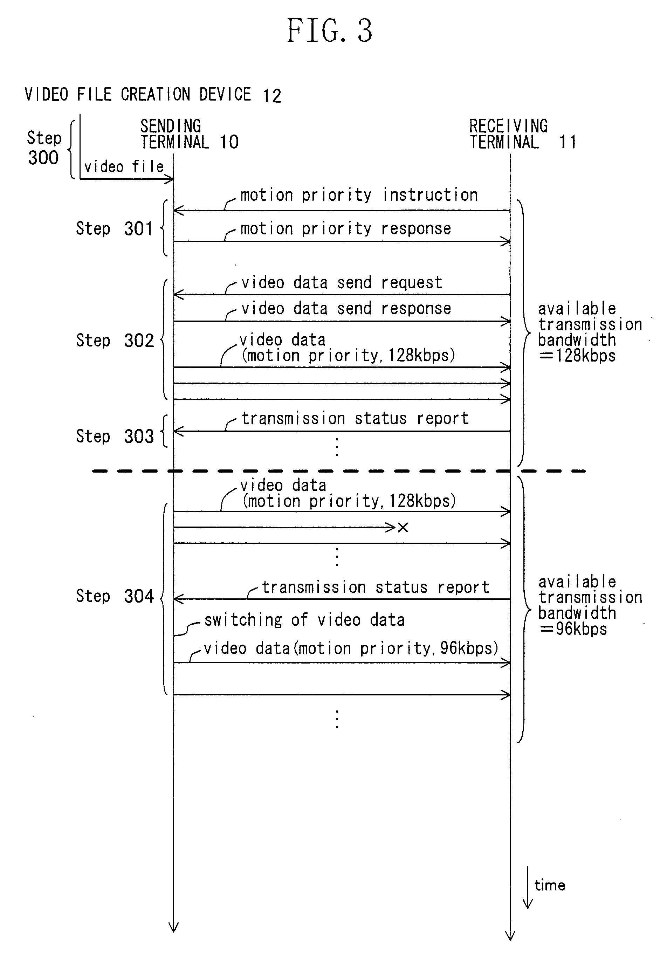

Fig. **3** is a sequence diagram illustrating the operation of the video distribution system in Fig. **1**. First, in the video file creation device **12**, the video file in Fig. **2** is created from certain content, and stored in the sending terminal **10** before the video transmission (Step **300**). Then, before the video data are sent, the receiving terminal **11** sends motion/image quality priority instructions (Step **301**). In the example in Fig. **3**, the user has selected motion priority. Subsequently, the receiving terminal **11** sends a play instruction (video data send request) to the sending terminal **10**, and the sending terminal **10** begins the sending of video data as instructed by the motion/image quality priority instruction (Step **302**). In the example in Fig. **3**, the image data **1** with motion priority and 128 kbps are sent. The receiving terminal **11** periodically issues a transmission status report and the sending terminal **10** estimates the available transmission bandwidth based on this report (Step **303**). The bold dashed line in Fig. **3** indicates that the available transmission bandwidth has changed from 128 kbps to 96 kbps. When the sending terminal **10** detects that the available transmission bandwidth has become narrower in this manner, it switches the video data to be sent to the video data that are transmittable with the available transmission bandwidth, for example in Fig. **3** the video data **2** with motion priority and 96 kbps (Step **304**). For this, the sending terminal **10** follows the user's motion/image quality instructions. It should be noted that in the example in Fig. 3, the motion/image quality instructions were performed before sending the video data, but it is also possible to send the motion/image quality instructions during the transmission of the video data.

Regarding the storage format of the video data, if a format is applied that combines the video data as separate access units, then the sending time has to be looked up searching in order from the beginning of the video data every time the sent video data are switched. This is because it is necessary to begin the sending of the video data after the switching starting with a continuation of the video data before the switching. This operation makes the smooth switching of files difficult. For example, when a switching of the video data occurs near the termination time of long-playing content, then the sending times of all data from the beginning of the video data up to the vicinity of the last video data are looked up, so that the processing time for the switching becomes long, and the video is halted for the time of this processing.

In accordance with the present invention, however, the switching of the video data due to a change in the available transmission bandwidth or due to user instructions is performed smoothly by recording two or more video data portions, from which one is to be sent (or received/reproduced) at a certain time, as one access unit in the video file.

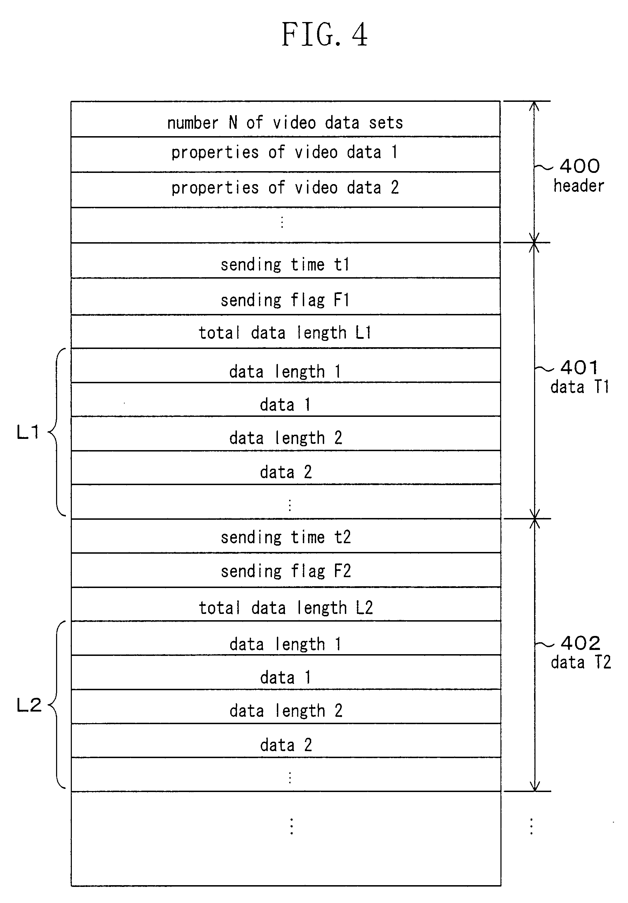

Fig. **4** shows an example of a specific format of the video file in Fig. **2**. According to the format in Fig. **4**, the video file is made up of a header **400**, and regions **401** and **402** of data **Tn** (n = 1, 2, ...) for each sending time.

The header **400** stores the number N (in the example in Fig. **2**: N = 6) of the video data sets stored in the video file. Then, it stores the properties of each of the video data sets. In this case, the properties include information indicating whether the video data have been encoded with motion priority or with image quality priority, and their encoding rates.

The region **401** of the data **T1** stores first the sending time **t1,** the sending flag **F1,** and the total data length **L1,** in that order. The sending time **t1** is the time at which one of the video data portions included in this region **401** should be sent. The sending flag **F1** is a flag representing the numbers of the video data sets that should be sent at the sending time **t1.** For example, if N = 6 and six sets of video data are stored in the video file, and if the partial data of one of the video data **1,** video data **2** and video data 5 are sent at the time **t1**, then **F1** = "110010". That is to say, the i-th bit (with i = 1 .. 6) from the beginning of the sending flag **F1** indicates whether the video data i are sent at the time **t1**. If the value of the i-th bit is "1", then they are data to be sent, and if it is "0", then they are not data to be sent. The total data length **L1** indicates the length of the remaining portion in region **401.** Following this total data length **L1,** groups of data length of the video data j sent at the time **t1** and the video data j are stored in order (for example, j = 1, 2, 5). Here, the stored video data j are the video data for which the corresponding bit of the sending flag **F1** is **"1".** The file structure of the following region **402** of the data **T2** and beyond is the same as that of the region **401.**

Referring to the video file format shown in Fig. **4**, the following is an explanation of how the video data selection portion **102** and the video data read-out portion **104** in Fig. **1** process the video data.

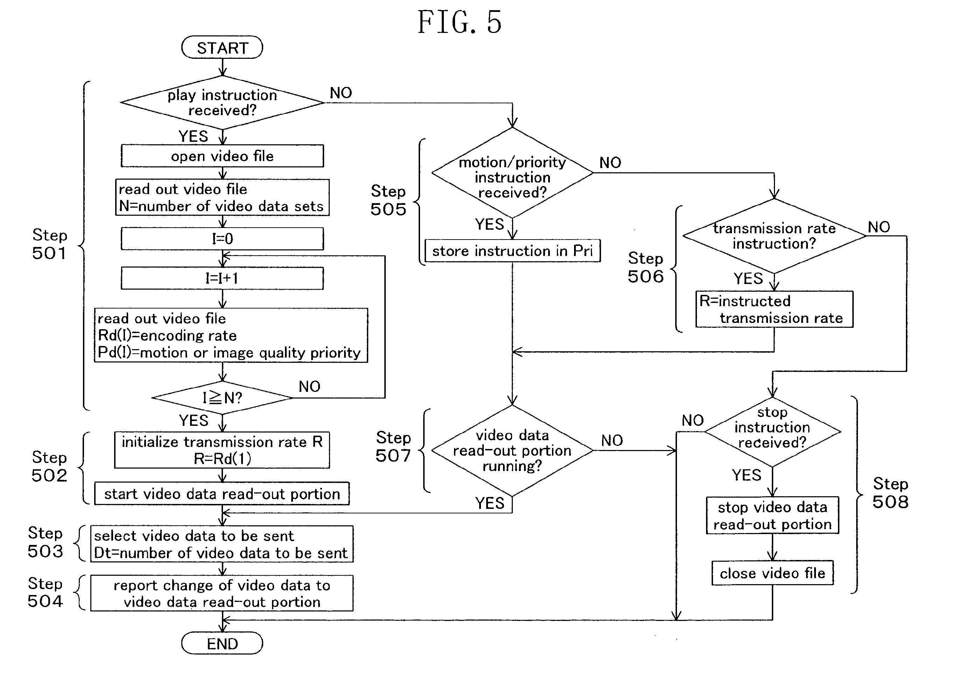

Fig. **5** illustrates the operation of the video data selection portion **102** in Fig. **1.** The operation in Fig. **5** is performed when the video data selection portion **102** receives a report from the transmission control portion **100** or the transmission bandwidth estimation portion **101**. If the received instruction is a play instruction, then the video file is opened, the number N of video data sets is read from this video file, and based on this number N, the information Pd(I) indicating whether the video data I are encoded with motion priority or with image quality priority, and the encoding rate Rd(I) of the video data I are read out and stored (Step **501**). Next, the initial value of the transmission rate R is set as appropriate, and the video data read-out portion **104** is started (Step **502**). For example, the encoding rate of the video data **1**, that is Rd(1), is taken as the initial value of the transmission rate R. Then, the video data to be sent are selected (Step **503**). Here, the number of the selected video data set is taken to be Dt. The selection method is explained below. Lastly, the change of the video data is reported to the video data read-out portion **104**, and the operation is terminated (Step **504).**

On the other hand, in the flowchart in Fig. **5**, if the received instruction is a motion/image quality priority instruction, then this instruction is stored in Pri (Step **505**). If a transmission rate instruction has been received from the transmission bandwidth estimation portion **101**, the instructed transmission rate is stored in R (Step **506**). After carrying out the processes of Step **505** and Step **506**, it is determined whether the video data read-out portion **104** is running, and if it is running, the Steps **503** and **504** are carried out, whereas if it is not running, the operation is terminated (Step **507**). If the received instruction is a stop instruction, then the video data read-out potion **104** is stopped, the video file is closed, and the operation is terminated (Step **508**).

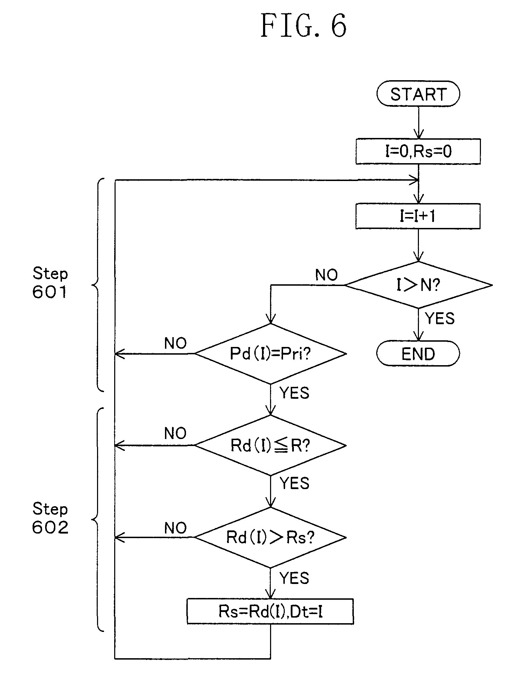

Fig. **6** illustrates Step **503** in Fig. **5,** which decides the number of the video data set to be sent, in more detail. First, the reference encoding rate Rs is initialized to 0. Then it is determined whether the information Pd(I) of the video data I matches with the instruction Pri regarding motion/image quality priority, and if they do not match, then the procedure advances to the checking of the next video data, and if they do match, the procedure advances to the checking of the transmission rate (Step **601**). If the encoding rate Rd(I) of the video data I is not higher than the instructed transmission rate R, and if it is higher than the encoding rate of video data checked in the past, in other words higher than the reference encoding rate Rs, then the number of the video data I is recorded as the number Dt of the video data to be sent, the reference encoding rate Rs is updated, and the procedure returns to Step **601** (Step **602**). By performing this on all video data in the video file, video data having a maximum transmission rate in a range that is not larger than the instructed transmission rate R can be selected as the video data to be sent.

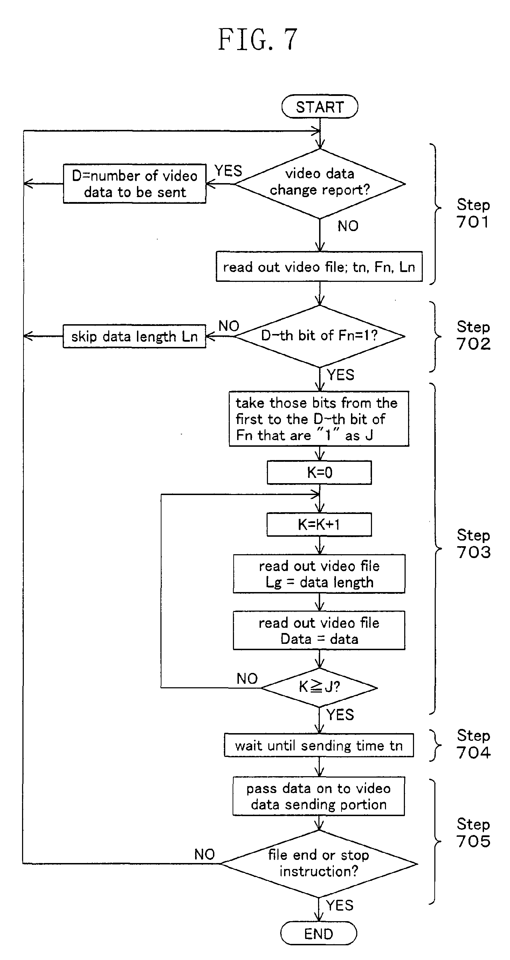

Fig. **7** illustrates the operation of the video data read-out portion **104** in Fig. **1.** The video data read-out portion **104** reads out the necessary video data by reading in the continuation of the video file that has been opened by the video data selection portion **102** with the following steps. First, if the video data read-out portion **104** receives a video data change report from the video data selection portion **102**, it stores the number D of the video data to be read out, and if it does not receive a video data change report, it reads in the sending time tn, the sending flag **Fn** and the total data length **Ln** from the video file (Step **701**). Then, it is determined from the sending flag **Fn** whether the video data D should be sent at the time tn, and if there are no data to be sent, that is, if the D-th bit from the beginning of the sending flag **Fn** is "0", then, based on the total data length **Ln**, the data up to the next sending time are skipped (Step **702**). If there are data to be sent, then the data length **Lg** is read out, the step of skipping the data Data is repeated until reaching data to be sent, and the necessary video data are read out into Data (Step **703**). Then, the procedure waits until the sending time tn (Step **704**). At the sending time tn, the data Data are passed on to the video data sending portion **105**, and when a stop instruction has been received or the end of the video file has been reached, the operation is terminated, and if that is not the case, then the procedure returns to Step **701** (Step **705**).

As described above, by using the video file format of Fig. **4** it becomes unnecessary to perform the process of searching the video data portion corresponding to the next sending time starting with the beginning of the video file, when switching the video data to be sent.

It should be noted that in this embodiment of the present invention, as illustrated in Fig. **2**, two types of video data, namely with motion priority and with image quality priority, are prepared for each encoding rate, but it is also possible to prepare only one type of video data for the various encoding rates. For example, it is possible to prepare only the video data **1** to **3** for motion priority in Fig. **2** as the video file. Then, when the available transmission bandwidth is reduced or increased in the case of motion priority, the video data to be sent are switched. And when the available transmission bandwidth is reduced or increased in the case of image quality priority, then the transmission rate is adjusted by culling the frames of the video data without switching the video data to be sent.

Furthermore, it is also possible to determine the motion/image quality priority not based on the user's instructions but to prepare the video data encoded with either motion or image quality priority based on the type of content. For example, if the content is a sports program, then only video data with motion priority, and if the content is a news program or a movie then only video data with image quality priority are prepared, and the video data to be sent are switched depending on the change of the available transmission bandwidth. Thus, when the available transmission bandwidth becomes narrow, it is possible to switch between motion and image quality priority depending on the type of content.

The present invention can be applied not only to unicast but also to multicast video distribution systems, on wired networks or on wireless networks. Furthermore, the present invention can be applied not only to video distribution systems using narrow-band transmission paths, but also to those using broad-band transmission paths. Also in the case of broad-band, it can be expected that the sent content is accordingly of high quality, and the information amount to be sent is large, so that also in this case transmission rate control will be necessary.

The invention may be embodied in other specific forms without departing from the spirit or essential characteristics thereof. The embodiments disclosed in this application are to be considered in all respects as illustrative and not restrictive, the scope of the invention being indicated by the appended claims rather than by the foregoing description. All changes that come within the meaning and range of equivalency of the claims are intended to be embraced therein.

## Claims

1. A transmission rate control method controlling a transmission rate by dynamically switching between at least two sets of video data encoded from at least one viewpoint of encoding rate variation, motion priority and image quality priority, in accordance with a change of an available transmission bandwidth or a user instruction.

2. The transmission rate control method according to claim 1,
comprising a step of preparing a video file including said at least two sets of video data, created beforehand based on the same content.

3. The transmission rate control method according to claim 2,
wherein said preparation step comprises a step of recording at least two video data portions, one of which is to be sent at a certain time, as one access unit into the video file.

4. The transmission rate control method according to claim 2,
wherein said preparation step comprises a step of recording a plurality of video data sets having different degrees of error robustness in the video file.

5. The transmission rate control method according to claim 1, comprising the steps of:
estimating available transmission bandwidth;
selecting one of said at least two sets of video data in accordance with the available transmission bandwidth; and
sending the selected video data.

6. The transmission rate control method according to claim 1, comprising the steps of:
receiving a motion/image quality priority instruction from a user;
selecting one of said at least two sets of video data in accordance with the motion/image quality priority instruction; and
sending the selected video data.

7. The transmission rate control method according to claim 1, comprising a step of selecting video data after switching based on encoding parameters of the video data before switching.
